# EUROPEAN PATENT APPLICATION

(11) **EP 2 090 158 A1**
(43) Date of publication of application: **19.08.2009**
(21) Application number: 08290148.9
(22) Date of filing: 15.02.2008
(51) Int. Cl.: A01K 1/015, A01K 1/03, A01K 1/02

(54) **Temperature controlled pet kennel**

(71) Applicant: Covenant Partners, Inc., Revere, MA 02141 (US)
(72) Inventor: McKinney, Cecil, Kissimmee Florisa 34743 (US)
(74) Representative: Demulsant, Xavier

(57) **Abstract**

Various embodiments of the invention are directed toward a heating and cooling system for pet living spaces, which is easily transportable and is efficient in heating and cooling the pet because it heats and cools both the air surrounding the pet and the surfaces that the pet lays upon.

## Description

### FIELD OF INVENTION

Various embodiments of this invention relate, generally, to pet kennels and pet carriers; more particularly, to systems that regulate the temperature within pet kennels and pet carriers.

### BACKGROUND

As pets are a ubiquitous part of life, pet carriers have been developed in order to allow the easy transport of pets along with their owners. While relatively simple devices are sufficient in order to cage or carry pets, because animals are sensitive to extreme temperatures, simple pet carriers are inadequate in conditions where the pets may encounter extreme temperatures. If, for example, a pet is kept in a car with closed windows on a sunny day, the pet may experience extreme temperatures that could harm the pet. Likewise, if a pet is left within a car or outdoors on a very cold day, the pet could be harmed by the cold weather. Thus, several pet kennels and pet carriers have been developed that seek to regulate the temperature encountered by the pet while within the carrier.

U.S. Patent No. 6,237,531 to Peeples et al., for example, discloses a pet bed with heating and cooling capabilities. Peeples' device operates using a thermoelectric unit, which is mounted to the underside of the device with appropriate ducting for air circulation such that, depending on the electrical connection, heating or cooling is provided to a sink that is integral to the pet bed platform. In this manner, Peeples discloses a system for regulating the temperature of a bed upon which a pet lies. Peeples, however, fails to disclose a system that is sufficiently compact to be integrated into a pet carrier. Furthermore, Peeples devices address the temperature experienced at the surface of the bed, but does not regulate the ambient temperature in the ambient air surrounding the bed. Regulating both the surface temperature and the ambient air temperature is highly desirable for a number of reasons. First, in order to protect a pet from extreme temperatures, one must regulate the temperature encountered on all surfaces of the pet's body. Second, because a bed or bottom surface is in direct contact with the pet's body, it provides a highly effective means for heat transfer between a thermostatic device and the pet itself.

Other devices that disclose means for protecting pets from extreme temperatures are disclosed by U.S. Patent No. 6,446,577 to Salahor, and U.S. Patent Application Publication No. 2003/0127060 to Yeung. Salahor's patent discloses a pat carrier featuring an insulated cloth cover. Yeung's patent discloses a pet carrier that features a compartment for inserting an air conditioning pad. While these devices disclose passive means for minimizing the impacts of extreme temperatures, because they insulate the pet, rather than actively cool the pet, they are insufficient for applications in which the pet may encounter especially high air temperatures.

Further means for cooling pets while they are kept within kennels and carriers are disclosed by U.S. Patent Nos. 5,727,503 and 6,490,995 to Whittaker and Greene, Jr., respectively. Both Whittaker's and Greene's devices use ice as a means to supply chilled air to the animal's enclosed space. These devices suffer from certain shortcomings, because, as the ice is heated and melts, it is no longer effective in providing cooling. Also, ice is heavy and may be cumbersome to transport in large quantities. Moreover, the devices use fans to blow air over the ice in order to cool the air. While this method cools the ambient air surrounding the pet, it fails to cool the surfaces in contact with the animal's body, which is an effective means for effectuating heat transfer and cooling the pet.

Several devices for heating pet homes are disclosed by U.S. Patent Nos. 5,216,977, 6,637,374, and 6,923,144 to Allen, Jr., Hawks et al., and Little, respectively. Allen's device comprises a pet home that features a loft that includes a removable, electric heating system. Hawks' device, meanwhile, discloses a system for heating a pet home by an air duct that features an inlet and an outlet at the interior of the pet home. The air duct features a heating element that heats the interior of the pet home. Little's device discloses a system for keeping a pet warm while within the home by heating the bed upon which the pet lies. Beneath the pet's bed is featured a water tank with a submersible heater that heats the water, and by conduction, also heats the pet bed. While these devices disclose systems for keeping pets warm while in pet homes, they fail to disclose systems that may also keep pets cool. Further, they fail to disclose systems that are portable or lightweight enough to also be compatible with pet carriers.

Systems for cooling and heating pet homes are disclosed by U.S. Patent Nos. 4,827,872 and 5,746,271 to Sommers and DeCosta, respectively. Sommers' patent discloses a structure within a pet home that is surrounded by insulating materials, and heating and air cooling systems, such that the structure's temperature may be regulated. DeCosta's patent, meanwhile, discloses a climate controlled doghouse that features a heating and air conditioning unit mounted to its exterior surface. While both of these devices disclose systems that can cool and heat a doghouse, neither of them discloses systems that are compatible with portable pet carriers.

U.S. Patent No. 6,725,805 to Bach discloses another similar such device. Bach's patent discloses a pet shelter or incubator that features a heat generator and sensor that is responsive to the presence or absence of an animal inside. In this matter, Bach's patent discloses a device that is an incubator that is suitable for newborn and young animals. The device, however, is unsuitable for use as a pet carrier because it is relatively large, unwieldy, and requires a wall outlet for power.

A series of other systems, disclosed by U.S. Patent Nos. 4,878,359, 4,939,911, and 5,887,436 to Mandell, Mandell, and Duddleston, respectively, disclose pet carriers and vehicular pet kennels that feature means for controlling the climate around the pets. Mandell's '359 patent, for example, discloses a travel accessory for persons who must leave their pets in a vehicle on a sunny day occasionally. In order to protect the pet from heat exhaustion, the device discloses a system for providing cooled air to the interior of the pet enclosure. The '359 patent discloses the use of a mechanical compressor in order to generate cooled air. The mechanical compressor is operated by the vehicles power or an alternate power source. While the '359 patent discloses a means for keeping pets cool while within the enclosure, it fails to disclose a system that can also be used to keep pets warm. Furthermore, because the device uses a mechanical compressor to cool the ambient air, it is relatively unwieldy and cannot easily be carried around by the pet owner.

Mandell's '911 patent discloses a similar such device while improving on the portability of the '359 device by using solid-state devices, such as Peltier modules, in order to cool the air. Like the '359 patent, however, the '911 patent fails to disclose a means for also heating the pet's surroundings. Also, because both devices only cool the air surrounding the pet, their ability to transfer heat away from the animal is somewhat limited. Devices such as Peeples' more effectively regulate the pet's temperature because the surface bed that is in contact with the pet's body is temperature regulated.

Duddleston's patent discloses a portable cooled pet carrier that uses Peltier modules in order to cool the interior of the enclosure. The device further features a slidable lid member that allows the user to select between circulating air for the pet or drawing new air into the enclosure from the external surroundings. Duddleston's device, however, suffers from some of the same shortcomings discussed above. First, it fails to disclose a means for providing both cooling and heating to the pet. Second, the device's efficiency in cooling the pet is somewhat limited because it cools the air around the pet, rather than the surfaces with which the pet comes into contact.

Thus, there remains a long felt need in the art for a system for alternately heating and cooling pet kennels or carriers that can easily be transported, and is efficient in heating and cooling the pet by heating or cooling both the air surrounding the pet and the surfaces upon which the pet lies.

### SUMMARY OF THE INVENTION

Various embodiments of the invention are directed towards overcoming the above shortcomings by disclosing a heating and cooling system for pet carriers or kennels that is portable enough to be easily transported and is efficient in heating and cooling the pet by heating or cooling both the air surrounding the pet and the surfaces upon which the pet lies.

The heating and cooling mechanism for various embodiments of the invention is a solid-state device such as a Peltier module or thermoelectric (TE) module. Current is supplied to the TE module by a power source, which could be any of a: battery; conductor that connects to a vehicle power source, such as a cigarette lighter outlet; conductor that connects to a wall outlet; rechargeable battery; power adaptor; or other such power source. The TE module is configured within the system to selectively supply heating or cooling by switching the direction of the current that flows through the TE module.

The heating and cooling mechanism in various embodiments of the invention may further feature a thermostatic control system. The thermostatic control system allows a user to select a desired temperature for the heating and cooling system, which the system accordingly adjusts to achieve the desired temperature adjustment. In various embodiments of the invention, the thermostatic control system comprises a system that increases the power supplied to the thermoelectric module in proportion to the difference between said inputted desired temperature and the measured temperature.

Various embodiments of the invention improve upon prior art systems by utilizing both conduction and convection means in order to cool the pet. Conduction means comprise, generally speaking, the transfer of heat to or from the pet's body through one or more surfaces that come into direct contact with the pet's body. Convention means comprise, generally speaking, the transfer of heat to or from the pet's body by blowing air over the pet's body. Because heat transfer can occur more efficiently through conduction than through convection, the system utilized by various embodiments of the invention performs, generally, more efficiently than related-art systems that rely only upon convection heating and cooling means. Meanwhile, because conduction only serves to cool the portions of the pet's body that are in direct contact with the heating/cooling surface, convection used in combination with conduction supplies more efficient and effective heating and cooling to the pet as a whole than either method used alone.

The conduction system, in various embodiments of the invention, comprises a conduction surface that conducts the heat or cold generated by the TE module. The conduction surface is placed at the floor surface of the pet kennel or enclosure, such that the pet's body is in direct contact with the conduction surface. In various embodiments of the invention, the conduction surface is surrounded by an additional platform area, which is not cooled or heated in order to allow the pet an alternatively area on which to stand that is not heated or cooled. The conduction surface is configured to come into contact with the TE module either directly or by an intermediary heat conducing material. In either case, as heat or cold is generated by the TE module, the conduction surface's temperature is efficiently altered because it is in contact with the TE module and heat conduction efficiently occurs between the two.

Meanwhile, because the conduction surface is configured within the pet enclosure such that it makes direct contact with the pet's body, it also performs effective heat conduction with the pet. Thus, heat or cold generated by the TE module is effectively transferred to the pet's body by the conduction surface. Because conduction is, generally, a more efficient means of performing heat transfer than convection, this system represents a marked improvement on prior art systems that only rely upon convection heating and cooling means. The conduction surface may be manufactured from any of the materials having high thermal conductivity known in the art, such as aluminum, steel, magnesium, copper, brass, tin, or any other such material that is known in the art. When combined with a convection system, the conduction system provides and effective and efficient means for cooling or heating a pet's entire body.

The convection system, in various embodiments of the invention, comprises a heat exchange surface, an air plenum, and an implement for inducing airflow, such as a fan. The heat exchange surface can be a heat sink configured to be in direct contact with the TE module such that heat conduction between the two occurs more efficiently. The heat sink may further feature an array of fin-like projections that are placed within the air plenum, over which air passes to aid in convection. In other embodiments, the conduction plate alone can act as the heat exchange surface.

The air plenum serves as an area for drawing air into the heating and cooling system, allowing heat convection to occur by passing the air over the heat sink, and allowing the heated or cooled air to exit to the interior of the pet enclosure. In various embodiments of the invention, the convection source is directed to the face of the pet in order to more effectively cool the pet. The air plenum, in various embodiments of the invention, draws air from a source outside of the pet enclosure, while in other embodiments, draws air from within the pet enclosure.

In various embodiments of the invention, the airflow implement comprises one or more types of electrical fans known in the art. Various types of electrical fans are known within the art and remain within the contemplation of the invention, including but not limited to axial fans, centrifugal fans, radial fans, cross flow fans, tangential fans, and any other such fan types that are known within the art. The fan operates, generally speaking, by inducing airflow through the air plenum to be passed over the heat sink.

In various embodiments of the invention, the heat sink additionally serves as a means for connecting the conduction surface, both physically and thermally, to the thermoelectric module.

Various embodiments of the invention further feature a second heat sink and second heat sink fan. The second heat sink is located at the side of the thermoelectric module opposite the first heat sink. The second heat sink fan serves to draw air over the second heat sink and out of the pet enclosure. In this manner, the second heat sink facilitates the more efficient operation of the heating and cooling system.

Because of the relative efficiency of conduction as a means of heat transfer, the principles of the invention may be practiced without the use of the convection methods that are claimed in other embodiments of the invention. In these embodiments that only utilize conduction methods, the elements of the device that are required for convection are eliminated, thus, reducing manufacturing costs. Meanwhile, because these embodiments allow both heating and cooling while relying upon thermoelectric technology, they represent a marked improvement on related art devices, such as Peeples'. While Peeples discloses the use of thermoelectric modules to perform heating and cooling for pet beds, it fails to disclose a pet enclosure that performs both heating and cooling through both convection and conduction. Peeples' rather relies upon the convection heating or cooling of a ring of air that surrounds the pet bed. This system is relatively inefficient in exchanging heat with the pet in comparison to the systems disclosed by various embodiments of the invention.

Various embodiments of the invention further feature a remote monitoring system, which allows the user to monitor the pet and the condition of the pet enclosure remotely. The remote monitoring system allows the transmission of audio signals, still photo signals, video signals, physical vibration information, or temperature information, to a remote monitoring device, and may feature an imaging device. The remote monitoring device may be any of the various devices for remote monitoring known within the art, including but not limited to, computers, internet compatible devices, cellular devices, personal data assistants, or closed circuit televisions.

The principles of the invention may be practiced with any of the various pet carriers, pet kennels, pet enclosures, doghouses, or similar such pet living spaces or carrying cases known in the art. The pet living spaces may be manufactured from plastic, polyurethane, fiber reinforced plastic, anti-microbial molded plastic, cardboard, wood, metal, metal alloy, fiberglass, or any other materials known within the art to be used for manufacturing pet living spaces or carrying cases. The invention may be packaged as a stand-alone modular unit that can be variably outfitted to any of these various pet living spaces or carrying cases, or as an integrated portion of said pet living spaces or carrying cases. These, and other implementations of heating and cooling systems, remain within the contemplation of the invention.

### BRIEF DESCRIPTION OF THE DRAWINGS

**FIG. 1** is a side perspective view of the carrier in accordance with the first embodiment of this invention.

**FIG. 2** is a front perspective view of the carrier in accordance with the first embodiment of this invention.

**FIG. 3** is a cross-sectional perspective view of the first embodiment of this invention.

**FIG. 4** is cross-sectional perspective view of the first embodiment of this invention.

**FIG. 5** is a block diagram of the circuitry used in this invention.

**FIG. 6** is a side perspective view of the kennel in accordance with the second embodiment of this invention.

**FIG. 7** is a side perspective view of the kennel in accordance with the second embodiment of this invention.

**FIG. 8** is a side view of the regulatory unit used in the second embodiment of the invention.

**FIG. 9** is a side perspective view of the thermoregulatory unit used in the second embodiment of the invention.

**FIG. 10** is a side perspective view of the thermoregulatory unit used in the second embodiment of the invention.

**FIG. 11** is a block diagram showing the relationships of some of the components involved in the invention.

**FIG. 12** is a cut-away section of a pet carrier that features one embodiment of the heating and cooling system.

**FIG. 13** is an exploded detailed view of a heating and cooling system of one embodiment of the invention.

**FIG. 14** is a cut-away section of a heating and cooling system of one embodiment of the invention.

**FIG. 15** is a perspective cut-away section of a heating and cooling system of one embodiment of the invention.

**FIG. 16** is a perspective detailed view of a heating and cooling system of one embodiment of the invention.

### DETAILED DESCRIPTION OF THE DRAWINGS

In the following detailed description of various embodiments of the invention, numerous specific details are set forth in order to provide a thorough understanding of various aspects of one or more embodiments of the invention. However, one or more embodiments of the invention may be practiced without these specific details. In other instances, well-known methods, procedures, and/ or components have not been described in detail so as not to unnecessarily obscure aspects of embodiments of the invention.

While multiple embodiments are disclosed, still other embodiments of the present invention will become apparent to those skilled in the art from the following detailed description, which shows and describes illustrative embodiments of the invention. As will be realized, the invention is capable of modifications in various obvious aspects, all without departing from the spirit and scope of the present invention. Accordingly, the drawings and detailed description are to be regarded as illustrative in nature and not restrictive. Also, the reference or non-reference to a particular embodiment of the invention is not intended to, and shall not be interpreted to, limit the scope the invention in any way. Various embodiments of the invention remain useable in tandem or in combination of one another.

In this detailed description, certain terminology is used to describe certain features of one or more embodiments of the invention. For instance, "pet living space" refers to any pet kennel, pet carrier, dog house, pet enclosure, or other such pet living space known in the art, and "thermoelectric module" refers to any Peltier device, TE module, or other solid-state device for generating heating and cooling that is known in the art.

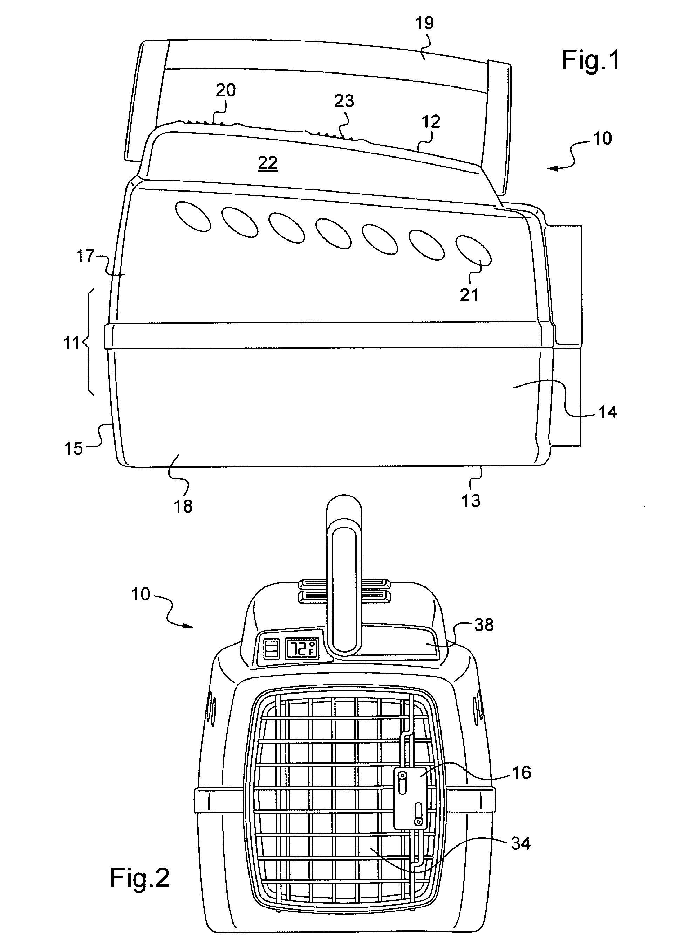

Referring to **FIG. 1** and **2****,** shown therein is a pet carrier **10** according to the first embodiment of the present invention. The carrier **10** includes a pet enclosure portion **11** including top **12,** bottom **13,** side **14,** rear walls **15** and an openable access port **16,** which define a space into which a pet can comfortably be received. A resilient panel **34** is removably attached to the inside of the openable access port **16** by removable detent elements in the form of screws. As will be understood by those skilled in the art, other forms of detents can be employed if desired. The resilient panel **34** does not completely cover the access port **16** but leaves a gap, ranging from 1 cm to **30** cm, around its perimeter to allow air to be exchanged between the outside and the inside of the pet enclosure. The pet enclosure portion **11** is also divided into upper **17** and lower **18** detachable enclosure portions, which are removably connected together by removable detents. The upper and lower enclosures of the carrier can be disassembled if need be, for transport, or to gain better access for cleaning. There are vents **21** on the sides of the upper enclosure portion, which permit air therein to be replenished by fresh air. A handle **19** is positioned on the top of the housing/kennel to facilitate movement of the carrier. A thermoregulatory unit **22** is located at the ceiling side of the upper enclosure **11.**

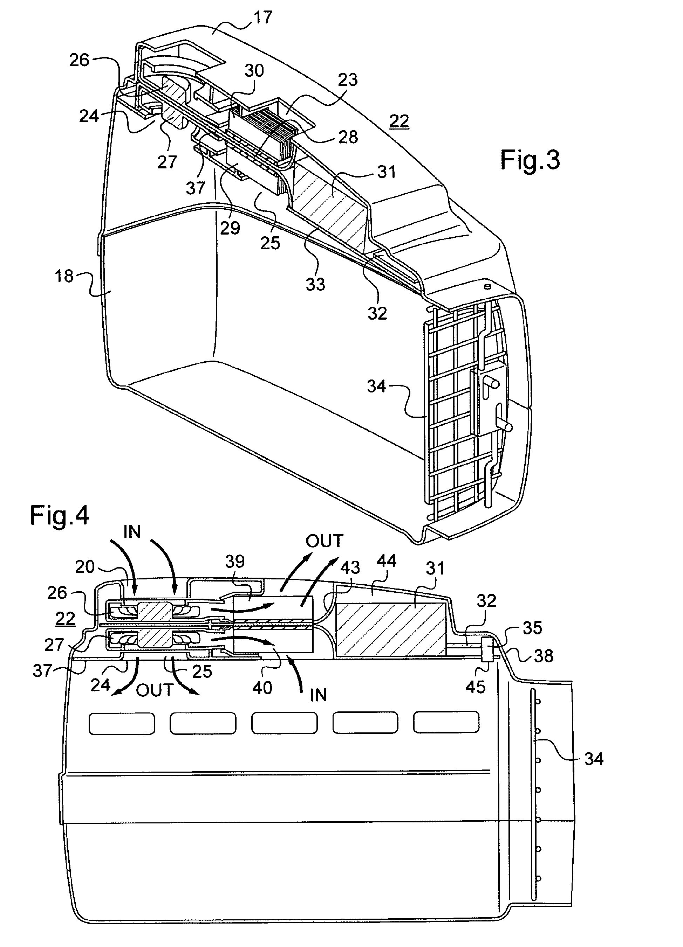

**FIG. 3****,** a cross-sectional perspective view of the pet carrier, showing a thermoregulatory unit reveals a detachable ceiling barrier **33,** which separates the thermoregulatory unit from the upper enclosure **17.** The barrier **33** can be disengaged by removing some detents. The thermoregulatory unit **22** comprises external **20** and internal **24** air intake ports; external **23** and internal 25 air exhaust ports; upper **26** and lower **27** fans; a single thermoelectric element **28;** upper **39** and lower **40** chambers; external 30 and internal **29** heat exchanger fins; thermal control printed circuit board **32,** imaging device **35,** and control panel **38** to operate the unit either manually, automatically, and/or remotely. Alternative embodiments could include more than one single thermoelectric element **28.**

The external air intake ports **20** and external air exhaust ports **23** are unconnected to and separated from the internal air intake **24** and internal air exhaust ports **25,** respectively, by a horizontal divider **37,** thereby creating an upper **39** and a lower **40** chamber. This divider **37** prevents ambient air from mixing with air from the pet enclosure, thereby limiting the volume of air that needs to be temperature-regulated by the thermo-regulatory unit **22.**

**FIG 4** shows a preferred thermoregulatory unit **22** for the first embodiment, which utilizes two fans and one thermoelectric element **28.** The typical thermoelectric element is manufactured using two thin ceramic wafers with a series of P and N doped bismuth-telluride semiconductor material sandwiched between them, but other materials are within the contemplation of the present invention. Connected to the thermoelectric element **28** are the external **30** and internal heat exchanger fins **29.** The external and internal fins are composed of materials including, but not limited to, copper and aluminum. There can be more than one thermoregulatory unit **22** and each may have more than one thermoelectric element **28.**

In the first embodiment, the thermoregulatory unit **22** is powered by a battery **31** connected thereto (*e.g.,* a stand-alone battery or the vehicle battery). The battery **31** is placed within the control chamber **44,** which is sealed from the upper and lower chambers by a wall **43.** In a preferred embodiment, one or more stand alone batteries are used so that the charge on the vehicle's primary battery is not depleted. It is also understood that the battery can be included as part of the carrier itself, or can be positioned separately in the vehicle and connected to the carrier by appropriate cables. In another aspect, the pet carrier can be provided with 110 volt AC to 12 volt DC power inverters so that the carrier can be used in a house, office, or outdoors, or may run on energy generated from solar panels. In practice, any power source could be used to power the unit. It is possible to conserve battery power of the unit if the owner selects only to operate the lower fan, and not also the upper fan and thermoelectric elements, in a more comfortable environment.

Also within the control chamber **44** of the thermoregulatory unit **22** is the imaging device 35. The imaging device **35** is removably affixed to the upper ceiling of the regulatory unit, and has a prism **45** attached to it that protrudes via a small hole approximately ¼ inch down into the ceiling barrier **33** but it could be attached elsewhere and could have a hole of a different size, shape, and/or location. The result is that the imaging device is able to point back inside the enclosure to capture moving images and/or still images of the pet inside the unit.

As the TE operates, the current flowing through it can create two possible effects: (1) the Peltier Effect (cooling) and (2) the Joulian Effect (heating). DC current applied across dissimilar materials causes a temperature differential. Using a thermoelectric device in the heating mode is very efficient because all of the internal heating (Joulian heat) and the load from the cold side are pumped to the hot side. This reduces the power needed to achieve the desired heat. Thermoelectric elements can be stacked to achieve even lower temperatures.

For the first embodiment, when the thermoregulatory unit is in the heating mode, the action of the lower fan **27** gently pushing air into the enclosure through the internal exhaust port **25** creates an air current that results in air from the enclosure being gently pulled up into the lower chamber **40** through the internal intake port **24.** Here the air encounters the internal heat exchanger fins **29,** which are heated. The resultant warm air is then pulled back through to the lower fan **27** (see **FIG. 4****).** As this is happening, the upper fan **26** is extracting ambient air through the external air intake port **20.** The ambient air is then blown across into the upper chamber **39,** where it encounters the external heat exchanger fins **30,** which are chilled. The resulting cool air is then expelled outside of the pet carrier by flowing through the external air exhaust port **23.**

When the thermoregulatory unit is in the cooling mode, the action of the lower fan **27** gently pushing air into the enclosure through the internal exhaust port **25** creates an air current that results in air from the enclosure being gently pulled up into the lower chamber **40** through the internal intake port **24.** Here the air encounters the internal heat exchanger fins **29,** which are chilled. The resulting cool air is then pulled back through to the lower fan **27** (see **FIG. 4****).** As this is happening, the upper fan **26** is extracting ambient air through the external air intake port **20.** The ambient air is then blown across into the upper chamber **39,** where it encounters the external heat exchanger fins **30,** which are now heated. The resultant warm air is then expelled, through the external air exhaust port **23,** outside of the pet enclosure. Vents **21** as well as the air gap between the access port **16** and the resilient panel **34** ensure that sufficient fresh air can be exchanged between the enclosure and the outside. As mentioned above, the presence of the divider **37** prevents air from the upper and lower chambers from mixing.

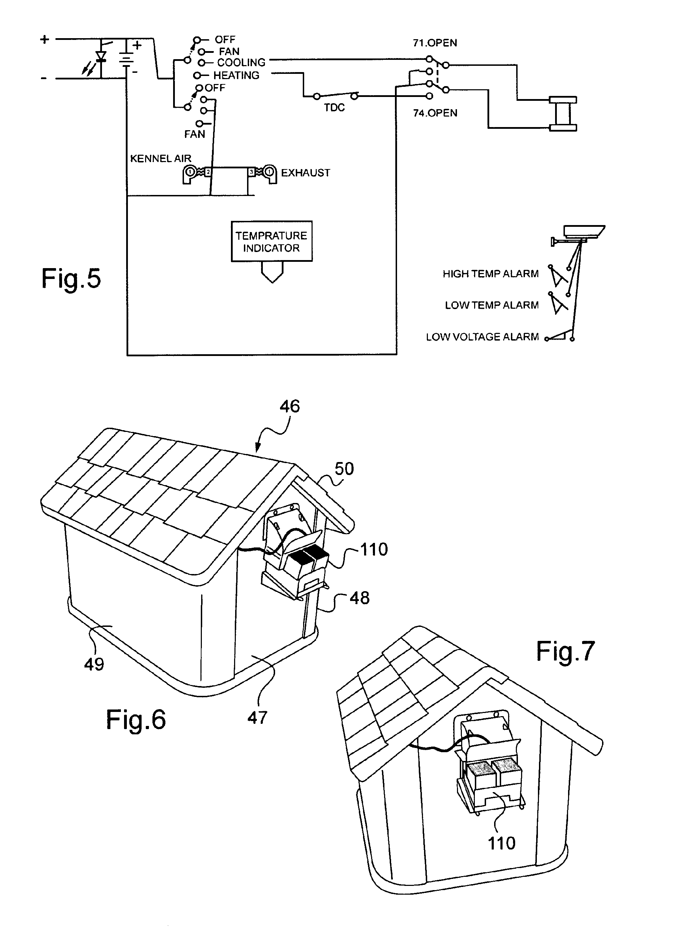

In **FIG. 5**, the control printed circuit board **32** comprises a temperature sensor feedback (thermistor or solid-state sensor) with a closed-loop control circuit to control/regulate the temperature. Using the thermistor, for example, the regulatory unit would be able to determine the current temperature within the pet enclosure, and then determine if the thermoregulatory unit should be placed in a COOL, HEAT, or OFF mode. When the sensor detects an over temperature condition within the enclosure, the thermoregulatory unit **22** is activated to begin cooling the air inside the enclosure. Alternatively, when the sensor detects an under temperature condition within the enclosure, the unit **22** is activated to begin heating the air. In another embodiment, a temperature may be selected and the unit can turn on and off keeping the carrier **10** within the selected temperature range.

There are also circuitries, within the printed circuit board **32,** that control the imaging device 35, as well as those to the transmitter/receiver unit, which enables the pet carrier to transmit and receive signals/images to and from a remote control device. In the preferred embodiment, the carrier will use a transmitter/receiver unit that incorporates existing cell phone technology to achieve this purpose. The remote device would be able to display a temperature indicator so that the pet owner can discern the temperature inside the carrier remotely. The remote device will be able to display information such as visual and/or audio alarms (or vibration mode similar to a paging device) when the temperature reaches a certain threshold, as well as still and moving images within the enclosure. The remote control device can be specifically manufactured and supplied with the pet carrier, or could be a user's cell phone/PDA/computer. In the latter case, conventional software would be installed to allow these devices to receive and transmit information to and from the kennel. Information defined here includes, but is not limited to: text; still images; moving images; sounds; vibrations; or any combination thereof. It is also understood that a global positioning satellite unit, as well as its circuitry, could be adapted to work with this first embodiment.

**FIGS. 6** and **7** show the second embodiment of this invention comprising a non-portable kennel **46** with the thermoregulatory unit **110** removably connected to the back end **47** of the kennel. The thermoregulatory unit **110** is shown here to be completely exposed. However, it is understood that the thermoregulatory unit **110** will be covered either with metal, or durable plastic, to protect its components therein from the environment. It should be appreciated that the thermoregulatory unit **110** could also be on the first wall **48**, second wall **49**, or the top wall **50** of the kennel, or inside the kennel itself. An openable access port can act as a vent, and it is understood that smaller windows/openings (not shown) could also be present on the walls of the enclosure. In this second embodiment of the invention, the imaging device **35** is installed on a portion of the front wall above the openable access port.

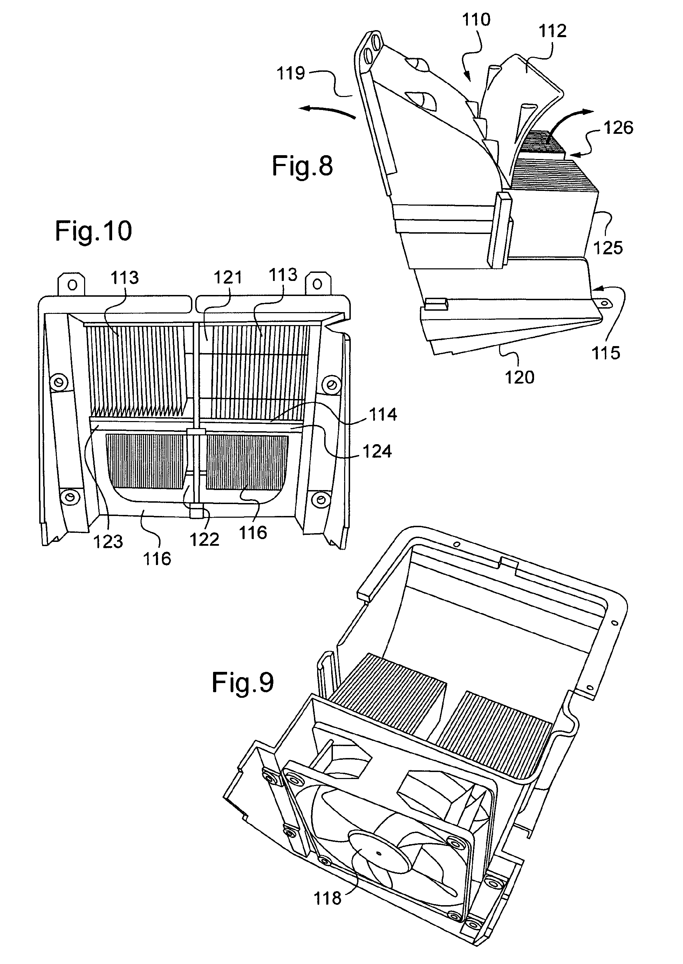

It should also be noted that the thermoregulatory unit **110** used in this second embodiment is different in terms of size and components compared to the first embodiment of this invention, the pet carrier. **FIGS. 8- 10** show the preferred second embodiment of the invention comprising an upper heating unit **125**; a lower fan unit **115**; two thermoelectric elements **123** and **124**; external heat exchanger fins **113**; internal heat exchanger fins **116,** vertical divider **114**; external deflector shield **112**; external air intake port **120**; internal exhaust/conditioned air port **119;** external exhaust port **126;** fan **118**; and external **121** and internal **122** chambers. The second embodiment, however, might possibly share the same printed circuit board, and electronic devices as those of the first embodiment, to detect and regulate temperature, and to transmit information to and from the kennel to a remote control device. There can be more than one thermoregulatory unit **22** and each may have more than one thermoelectric element **28**. In practice, any power source could be used to power the unit.

For the second embodiment, when the thermoregulatory unit **110** is in the heating mode, fan **118** (see **FIG. 8****)** gently extracts air from the environment and pushes the air up to the separated internal **122** and external **121** chambers, which are separated by a vertical divider **114.** The air in the internal chamber will encounter the internal heat exchanger fins **116**, which are heated. The resulting heated air is then expelled and deflected by the internal deflector shield (not shown) out through the internal air exhaust/conditioned port **119,** which directs air into the dog kennel, via an intake port present on the dog kennel. Air in the external chamber will encounter the external heat exchanger fins **113**, which are chilled. The resulting chilled air is then expelled out through external exhaust port **126**, where it is deflected by deflector shield **112**. When the thermoregulatory unit **110** is in the cooling mode, the internal heat exchanger fins are now chilled, resulting in cooled air being expelled out to the dog kennel.

The first (portable kennel) and second (stationary kennel) embodiments can be fabricated using a number of different materials including, but not limited to, anti-microbial coated molded plastic, extruded or molded polymer, enhanced polymer, cardboard, wood, metal or fiber glass. In another aspect, the inside walls of the carrier could be coated with insulated fabric composed of materials known in the art as insulators, including, but not limited to, poly-fiber. In the first embodiment, the openable access port **16** can be made of the same material as the carrier itself but may include a gasket disposed on an inside of the gate, and a resilient panel **34** made of materials including, but not be limited to, Plexiglas^{™} (Rohm and Haas Company, Independence Mall, West Philadelphia, Pennsylvania 19195), glass, or plastic. Alternatively, the openable access port for the first can be made of a more flexible type of material including, but not limited to, fabric and fabric and metal mesh netting, in which case the resilient panel **34** is not needed. In the second embodiment, the openable access port for the kennel is plastic flap-type, commonly used for dog doors; or alternatively, it may comprise multiple strip(s) of fabric, or plastic material, hanging down from the top of the openable access port frame, similar to those used in freezer rooms.

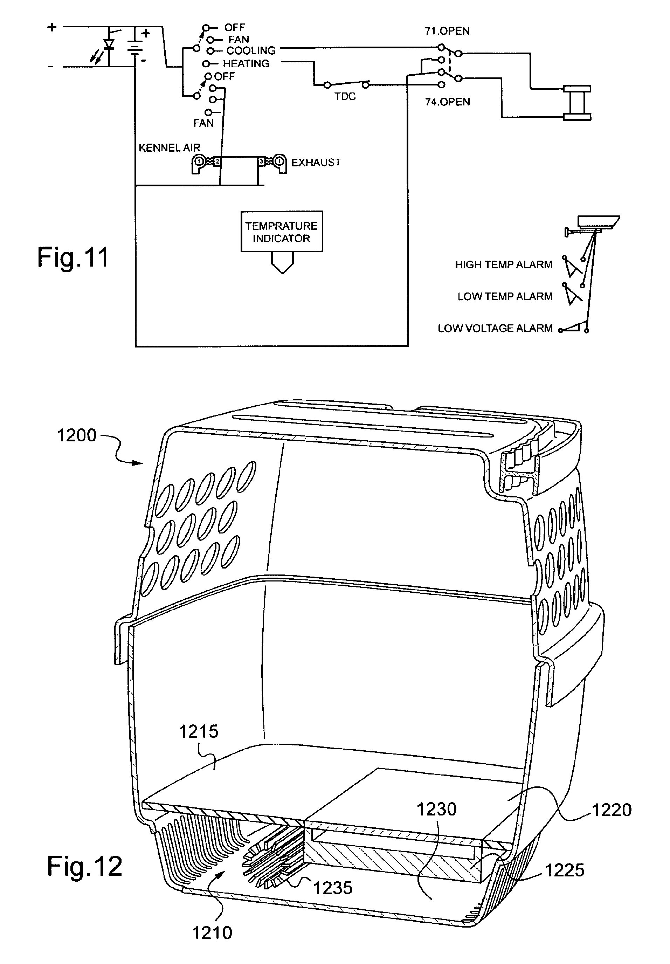

**FIG. 12** is a cut-away section of a pet carrier that features one embodiment of the heating and cooling system. A pet carrier **1200** is shown from a cut away section in order to illustrate its components, including a heating and cooling system **1210.** The heating and cooling system **1210** features a platform **1215**, a conduction surface **1220**, a ducting and insulation assembly **1225**, a heat sink and Peltier module **1230,** and an air fan **1235.** The platform **1215** serves as a floor surface, upon which a pet may stand or lay. Located adjacent to the conduction surface **1220,** it provides an area where the pet may reside within the pet carrier **1200** and not be subject to the cooling or heating effects of the conduction surface **1220**. The conduction surface **1220** assists with the cooling and heating functions of various embodiments of the invention. The conduction surface **1220** is attached directly or via an intermediary member to the Peltier module. Thus, efficient heat conduction occurs between the Peltier module and the conduction surface **1220.** Meanwhile, when a pet stands or lies upon the conduction surface **1220,** efficient heat conduction occurs between the pet and the conduction surface **1220**. Thus, the conduction surface **1220** serves an efficient means for cooling or heating the pet. Meanwhile, when used in conjunction with the air blower system, the heating and cooling system **1210** provides effective cooling and heating to the pet's entire body.

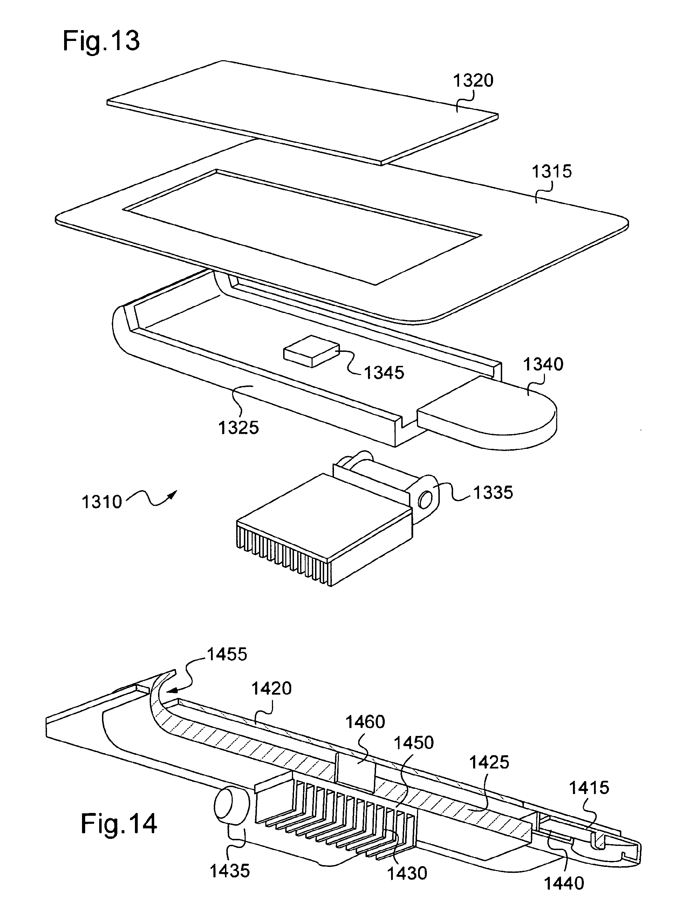

**FIG. 13** is an exploded detailed view of a heating and cooling system of one embodiment of the invention. The constituent parts of the heating and cooling system **1310** are displayed, including: the platform **1315**, the conduction surface **1320,** the insulation and ductwork assembly **1325**, the first heat sink **1345**, the second heat sink **1330,** the airflow fan **1340**, and the heat sink fan **1335**. As detailed above, the conduction surface **1320** performs important aspects of the heating and cooling functions through conduction. In this embodiment of the invention, cold or heat is supplied from the Peltier module to the conduction surface **1320** by the first sink **1345**. The other portions of the heating and cooling system **1310**, meanwhile, assist in the cooling or heating the remainder of the pet's body through convection. The convection system operates, generally speaking, by blowing air that is heated or cooled by the Peltier modules over the pet's body. As sir is drawn by the airflow fan **1340**, it passes across the first heat sink **1345** and the conduction surface **1320**, where it is cooled or heat. Then, the air is drawn into the pet enclosure in order to cool or heat the pet. The second heat sink **1330** and heat sink fan **1335**, meanwhile, serve to create a greater temperature differential between the two opposite surfaces of the Peltier module and , thus, more efficient operation of the heating and cooling system **1310.**

**FIG. 14** is a detailed cut-away section of a heating and cooling system of one embodiment of the invention. In this detailed cut-away section illustration, the various parts of the heating and cooling system for a pet enclosure are illustrated, including: the platform **1415**, the conduction surface **1420**, the insulation and airduct assembly **1425**, the Peltier module **1450**, the first heat sink **1460**, the second heat sink **1430**, the second heat sink fan **1435**, and the airduct fan **1440.** As illustrated in the figure, the heating and cooling system **1410** facilitates cooling both by conduction, via the conduction surface **1420** and convection, via the airduct system. The first heat sink **1460** conducts heat or cold from the thermoelectric module to the conduction surface **1420.** In this embodiment of the invention, the first heat sink **1460** is located within the airduct assembly **1425** such that air drawn by airduct fan **1440** over the first heat sink **1460** is heated or cooled. The airduct and insulation assembly **1425** features an opening **1455** at its end opposite the airduct fan 1440, which allows blown air to exit into the pet enclosure. In various embodiments of the invention, this opening **1455** may be configured to direct air towards the pet's face and, thus, effectively cool the pet. The second heat sink **1430** is located at the opposite end of the Peltier module **1450** of the first heat sink **1460** and features a second heat sink fan **1430** in order to assist in thermal exchange with the second heat sink **1435**. In this manner, the second heat sink **1430** and second heat sink fan **1435** facilitate more efficient operation of the heating and cooling system **1410.**

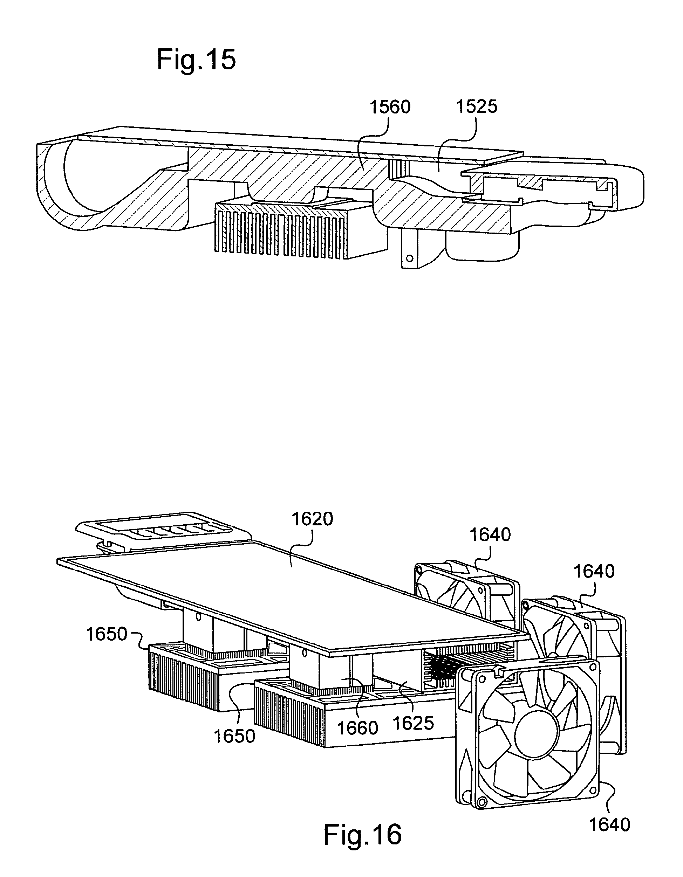

**Figure 15** is a perspective cut-away section of a heating and cooling system of one embodiment of the invention. **Figure 15** shows an embodiment in which the first heat sink **1560** has fins in the air duct **1525** to improve heat transfer.

**Figure 16** is a perspective detailed view of a heating and cooling system of one embodiment of the invention. **Figure 16** shows an embodiment that uses two Peltier modules **1650** and a thermally conducting member is mounted to the side of the first heat sink **1660** at act as both air duct and heat sink **1625**. Single or multiple Peltier modules **1650** can be used depending on the cooling and heating capacity required. The first heat sink **1660** simultaneously heats or cools the conduction surface **1620** and the air duct and heat sink **1625**. Air moved by the air duct fan **1640** is cooled or heated by the conducting air duct and heat sink **1625.**

## Claims

1. A heating and cooling system for a pet living space, comprising:
a thermoelectric module, said thermoelectric module configured such that it may alternatively generate heating or cooling,
a control system, said control system configured to control the operation of said thermoelectric module by commanding said thermoelectric module to alternatively generate heating or cooling, and
a conduction surface, said conduction surface configured to allow heat conduction from said thermoelectric module, through said conduction surface, and to the body of a pet.

2. A heating and cooling system for a pet living space according to Claim 1, wherein said control system further comprises a thermostatic control system, said thermostatic control system being configured to command said thermoelectric module to reach a user inputted desired temperature.

3. A heating and cooling system for a pet living space according to Claim 2, wherein said thermostatic control system comprises a system that increases the power supplied to said thermoelectric module in proportion to the difference between said user inputted desired temperature and the measured temperature of the cold plate.

4. A heating and cooling system for a pet living space according to any of Claims 1-3, further comprising a remote monitoring system to send and receive information related to the condition of the pet or the pet living space to a remote monitoring device.

5. A heating and cooling system for a pet living space according to Claim 4, wherein said information related to the condition of the pet or the pet living space comprises one or more selected from the following group: commands, audio signals, still photo signals, video signals, physical vibration information, temperature information.

6. A heating and cooling system for a pet living space according to Claim 4 or 5, wherein said remote monitoring device comprises a device selected from the group consisting of: computers, internet compatible devices, cellular devices, personal data assistants, closed circuit televisions.

7. A heating and cooling system for a pet living space according to any of Claims 1-6, wherein said pet living space comprises a pet living space selected from the group of: pet kennels, pet carriers, doghouses, pet enclosures.

8. A heating and cooling system for a pet living space according to Claim 6, wherein said pet living space is manufactured of a material selected from the group of: plastic, polyurethane, fiber reinforced plastic, anti-microbial molded plastic, cardboard, wood, metal, metal alloy, fiberglass.

9. A heating and cooling system for a pet living space according to any of claims 1-8, further comprising:
a heat sink, said heat sink being fixedly connected to said thermoelectric module and located such that a portion of said heat sink is within an air plenum,
said air plenum configured to allow air to pass over said portion of said heat sink within said air plenum and into said pet living space, and
a fan, said fan being configured to draw air through said air plenum,

10. A heating and cooling system for a pet living space according to Claim 9, wherein said heat sink further serves as a mounting device to connect said conduction surface to said thermoelectric module and further serves a heat conducting device to conduct heat from said thermoelectric module to said conduction surface.

11. A heating and cooling system for a pet living space according to Claim 9 or 10, further comprising a second heat sink, said second heat sink being fixedly connected to the opposite side of said thermoelectric module that said heat sink is mounted to.

12. A heating and cooling system for a pet living space according to any of Claims 9-11, further comprising a second fan, said second fan being configured to draw air over said second heat sink and out of said pet enclosure.

13. A pet carrier, comprising:
an enclosure suitable for housing pets and featuring an opening that allows the ingress and egress of pets to and from the enclosure, and
a heating and cooling system according to any of claims 1-12.
